# EUROPEAN PATENT SPECIFICATION

(11) **EP 1 410 565 B1**
(45) Date of publication and mention of the grant of the patent: **29.11.2017**
(21) Application number: 02745651.6
(22) Date of filing: 17.07.2002
(51) Int. Cl.: H04L 29/06, H04L 12/26, G06F 21/55, G06F 21/56

(54) **METHOD AND APPARATUS OF DETECTING NETWORK ACTIVITY**
VERFAHREN UND VORRICHTUNG ZUM DETEKTIEREN VON NETZWERKAKTIVITÄTEN
PROCÉDÉ ET APPAREIL DE DÉTECTION D'ACTIVITÉ DE RÉSEAU

(30) Priority: 26.07.2001 EP 01306438
(43) Date of publication of application: 21.04.2004
(73) Proprietor: BRITISH TELECOMMUNICATIONS public limited company, London EC1A 7AJ (GB)
(72) Inventor: SHACKLETON, Mark Andrew, Ipswich, Suffolk IP4 5AH (GB); HODGSON, Paul William, Bromeswell, Woodbridge IP12 3DL (GB)
(74) Representative: Nash, Roger William
(86) International application number: PCT/GB2002/003295
(87) International publication number: WO 2003/013057

(56) References cited:
- WO-A-00/36788
- WO-A-96/24210
- Debra Anderson ET AL: "Next-Generation Intrusion Detection Expert System(NIDES)", , 1 May 1995 (1995-05-01), XP055335692, Retrieved from the Internet: URL:http://www.cs.fsu.edu/~yasinsac/group/ slides/harley2.pdf [retrieved on 2017-01-16]

## Description

The present invention relates to methods of, and apparatus for, identifying types of network behaviour, and has particular application in identifying aberrant network behaviour, such as email viruses propagating through a network.

Email is the most widely used application service because it offers a fast, convenient method of transferring information. Its ability to communicate information quickly, seemingly independent of distance between sender and receiver, is one of the key features that makes email so attractive. Typically, these features can be exploited in a positive manner - e.g. to improve and increase the quality and quantity of business transactions; indeed it is precisely these factors that have made email so popular. However, these features can also be exploited in a negative manner - by so-called "viruses" - to cause disruption and even loss of data to the email recipient.

A virus is a piece of programming code, usually disguised as something else, that causes some unexpected and usually undesirable event, and which is often designed so that it is automatically spread to other computer users. The most common transmission means for a virus is by e-mail, usually as an attachment. Some viruses wreak their effect as soon as their code is executed; other viruses lie dormant until circumstances cause their code to be executed by the computer.

Known methods applied to virus detection include maintaining a library of known viruses, together with software for searching for these known viruses (e.g. McAfee™ and Dr Solomons ™, generally referred to as "anti-viral" software). These methods essentially perform analysis of byte-signatures of files in order to identify files having signatures corresponding to the known viruses.

Other known methods for identifying email viruses, such as that employed in McAfee's product "Outbreak Manager", analyses incoming email messages in accordance with certain criteria, and quarantines incoming messages if certain patterns, such as an inordinate number of e-mail messages with the same subject line or the same attachment, are detected. Although this approach claims to concentrate on analysing the behaviour of emails, it analyses emails with respect to certain features of the emails, and thus inevitably relies on some *a priori* email knowledge.

In November 2000, at the annual meeting for the Association of anti Virus Asia Researchers, a paper entitled "Rapid Virus Exchange" was presented by the technical director of an eminent computer virus company, Sophos (details of the presentation are available from AVAR administration, JCSR (Japan Computer Security Research center) 1-1 Midorigaoka-cho, Shizuoka-shi, Shizuoka-ken, 422-8052 Japan). The thrust of the paper is that the efficiency of current anti-virus warfare depends on the speed with which anti-virus manufacturers obtain virus samples, the speed with which the cure is found and the speed with which the cure can be distributed to the users of anti-virus software. Thus prior to the priority date of this invention, anti-viral thinking was focussed on the content of computer viruses.

International patent application PCT/DE99/03921, publication number WO0036788, describes a method of identifying irregularities in network management operations. The problem addressed in this invention arises from circumstances in which network management operations are carried out by both the network operator and end customers. The network operator has to bear the brunt of the network management behaviour of all its end customers, and, given that different end customers are highly likely to have different levels of experience and skill, managing the additional traffic etc. associated with different styles of network management can be extremely difficult.

Accordingly the invention described in WO0036788 employs two systems, a first of which is a supervised learning method that learns individual network manager's characteristics, and a second of which is a causal network method, which is user independent, but application specific, and comprises a plurality of application specific rules. Both systems receive, as input, network data (data travelling over the network), and are concerned with the state of the network itself.

In comparison with WO0036788, embodiments of the present invention are concerned with using detected traffic flow patterns to identify a problem in a system that resides on/over a network. Although WO0036788 discusses receiving data from network management applications, WO0036788 seems to be concerned with identifying problems with the state of the network itself, and does not analyse the impact of the logged data in the context of a specific system or application. This is to be expected, since WO0036788 clearly operates at the network level.

WO9624210 describes another network management method, in which network behaviour (router port utilisation during a particular time interval) is learnt to produce a state transition graph representing behaviour patterns. From this graph of historical data, predictions of future behaviour are then made based on the probability that a particular current network state will develop to a next network state. This method does not however provide a solution to the problem of identifying aberrant network activity indicative of an email virus, as the described method is, again, more concerned with states existing at the network level.

According to a first aspect of the invention there is provided a method of identifying behaviour patterns indicative of viral transmissions in respect of a system that operates over a communications network, the system comprising a plurality of server computers and client computers, wherein at least some of the server computers are arranged to deliver data items to, and receive data items from, one or more client computers over the communications network. The method comprises the steps of
(a) receiving data in respect of data items which have been sent within the system, each of the received data identifying the computer, within the system, from which the said data item has been sent;
(b) organising the received data into a representation indicative of the distribution of data items sent within the system, as a function of the identified computer; and
(c) using the representation to train a classification means to recognise a plurality of behaviour types.

Thus, in contrast to known methods, the method of the present invention does not make any presumptions about the type or features, of data, and instead classifies behaviour on the basis of levels of activity within the system. Moreover, the method of the present invention creates a representation identifying the *distribution* of sent data items, or "data traffic", within the system. This aspect of the invention is not described in any of the known methods and/or systems.

Creating such a representation is particularly beneficial for systems that are dedicated to sending data between computers, such as email, TELNET and FTP systems, among others. In the case of email systems, email viruses are likely to spread in accordance with the topological distribution of people sending and receiving emails. This can often be quite localised, e.g. emails are sent between people on the same subnet, in the same office or on the same site. By using a representation of this relationship the spread should be easier to capture, and the *type* of email virus can be identified at an early stage in its propagation. In addition, the representation can be used as a basis for visualisation of email activity, which enables real time monitoring of the changes in level of email activity. Preferably the received data is arranged into groups of data as a function of behaviour thereof, so that each group comprises data having characteristics of a type of behaviour. If required, the representation is transformed into a format suitable for input into a classification means, and input thereto, whereupon the classification means is trained in accordance with the transformed representation so that the classification means classifies the received data into one of the network behaviour types.

Preferably each group corresponds to a "known" type of network behaviour. Thus the classification means is trained using received data for which the type of network behaviour is known.

In one embodiment, the step of organising the received data into a representation involves creating a topological representation of the server and client computers in the system, and, for each received data item, incrementing a counter representative of a level of activity associated with the identified computer. Subsequently an identifier, which is indicative of a level of activity, is added to whichever part of the topological representation corresponds to the identified computer.

A topological representation implies notions of a distance metric i.e. where "nearer" things are positioned spatially closer on the representation. However, for the purposes of the following description, this distance metric may represent nearness in number of hops in a network or it could represent nearness in some other space e.g. "server name space" or "company department hierarchy space" or similar.

In one arrangement, this topological representation can comprise a plurality of regions, each of which is representative of an area of the network,
a plurality of sub-regions, each of which is representative of a server machine within a corresponding area of the network, and
a plurality of sub-sub regions, each of which is representative of a client machine acting as a client to a corresponding server machine, which client machine can be identified by a network address; and,
for each data item in the group, the step of adding an identifier to whichever part of the topological representation corresponds to the identified computer involves adding an identifier to whichever sub region or sub-sub region corresponds thereto. Preferably the step of transforming the representation into a format suitable for input into a classification means comprises firstly transforming the representation into a frequency representation of network activity, and secondly converting the frequency representation into a vector, which is suitable for input into a means. Conveniently a Fourier transform can be applied to the representation to generate the said frequency representation, and the frequency representation can then be sampled, using subsampling or bootstrap methods, in order to extract vector values therefrom.

Alternatively, and in a second embodiment, the received data items additionally identify attributes of the data sent within the system. In this embodiment, the step of organising a group of data into a representation involves the following steps:
creating a plurality of lists, each of which corresponds to a link between server machines in the system; and
   for each received data item:
   identifying a link over which the corresponding sent data item has passed;
   identifying a list corresponding to the identified link;
   identifying attributes of the data item; and
   for each identified attribute, incrementing a counter corresponding thereto in the identified list.

Conveniently data is received over a plurality of time periods, and the steps of organising the receiving data into a representation, and transforming the same, are performed for each of the said plurality of the said time periods. This means that there is a plurality of transformed representations for inputting to the classification means. Furthermore, embodiments of the invention can be carried out for different size time periods, so that behaviour having different characteristic time scales can be captured.

Preferably embodiments of the invention are applied to identify aberrant email activity, so that the received data are email data packets travelling over the network.

In terms of classifying unseen data, this can be performed once the classification means has been trained using the data processed using the above-described method steps. Classification of unseen data then involves the following steps:
receiving data in respect of the unseen data;
organising the received data into a representation as described above for either embodiments;
transforming the representation into a format suitable for input into the classification means as described above for either of the embodiments;
inputting the transformed representation to the classification means that has been trained in accordance with the received data; and
operating the classification means in order to identify a type of network behaviour associated with the unseen data.

Preferably the classification means is in operative association with an alerting means, so that, depending on the classification of the unseen data, an alert can be generated. Typically, if data is classified as having the potential to cause some damage, a large-scale alert, such as shutting down of parts of a network, is generated.

According to as second aspect of the invention there is provided apparatus corresponding to the method described above.

In the following description the terms "host", "client", "device" and "email data" are used; these are defined as follows:
"client" - a requesting program or user in a client/server relationship;
"host" - any computer that has two-way access to other computers in a network such as the Internet or an Intranet; a client is a particular type of host.
"device" - any machine that is operable to receive data delivered over a network. Examples of devices include hosts, clients, routers, switches, and servers.
"email data" - packet data that has emanated from an email application running on a first device en route for an email application running on a second device. Email data includes overhead data, which enables the packet to arrive at its destination, and is retrieved from the header part of a packet. Specifically email data includes at least protocol type, source address of packet, destination address of packet, size of payload of packet, and type of payload packet (which can be used to determine whether there is an attachment). A packet is identified as an email data type from examination of the protocol part of the header. The phrase "email packet data" and "email data" are used interchangeably in the following description.

Further aspects and advantages of the present invention will be apparent from the following description of preferred embodiments of the invention, which are given by way of example only and with reference to the accompanying drawings, in which
Figure 1 is a schematic diagram of a network, within which embodiments of the invention operate;
Figure 2 is a schematic diagram of components of a device comprising part of the wireless network of Figure 1;
Figure 3 is a flow diagram showing a method of classifying network behaviour according to an embodiment of the invention;
Figure 4a is a schematic diagram illustrating aspects of the method of Figure 3;
Figure 4b is a schematic diagram illustrating further aspects of the method of Figure 3;
Figure 4c is a schematic diagram showing further aspects of the method of Figure 3;
Figure 5a is a schematic diagram showing yet further aspects of the method of Figure 3;
Figure 5b is a schematic diagram illustrating other aspects of the method of Figure 3;
Figure 6 is a schematic diagram showing a classifier utilised by an embodiment of the invention;
Figure 7 is a flow diagram showing a method of classifying network behaviour according to a second embodiment of the invention;
Figure 8 is a schematic diagram showing aspects of the method of Figure 7.

### Overview of operating environment for embodiments of the invention

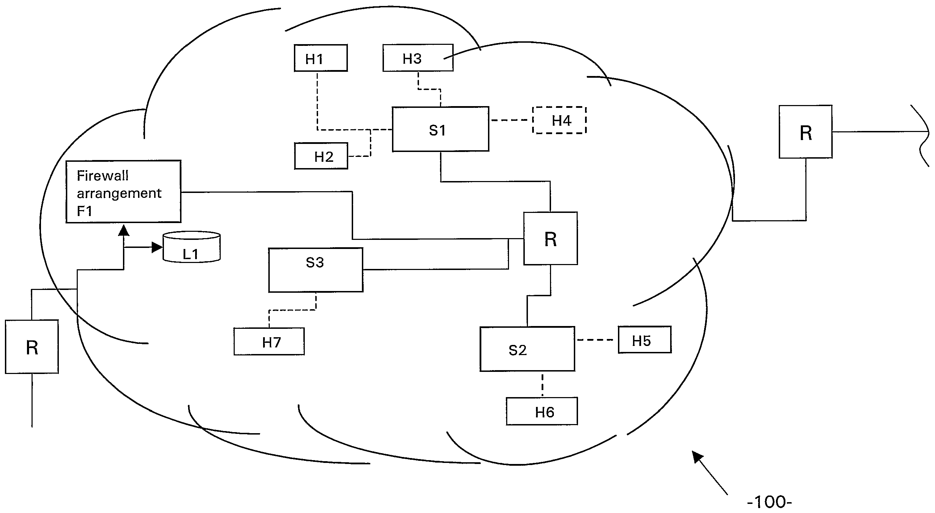

Figure 1 shows part of a network 100, having various devices operating therein. A network such as that shown in Figure 1 can be perceived as comprising a plurality of functional networks, one of which is an email network. An email network can be separated into a plurality of logical email domains, each of which comprises a plurality of server machines and client machines communicating therewith. Figure 1 shows part of a single logical email domain.

Thus the network 100 includes routers R, which route data to devices in the network in a manner known in the art and host machines H1 ... H7, which send and receive data, including email data, in a manner well known in the art. In the Figure, only a nominal number of routers R and host machines H1 ... H7 are shown for clarity. The network 100 additionally includes several email servers S1...Sn (only 3 shown for clarity), which receive email from host machines H1...H7 or from other email servers (not shown), and provide temporary storage of emails that are in transit to another destination. The dashed links shown in Figure 1 indicate email traffic passing between email server and host machine; for other communications, each of the host machines H1...H7 may communicate directly with the router R.

The network 100 could be a corporate network, typically comprising many interconnected Local Area Networks (LAN).

As stated above, the ability to communicate via email can be exploited by "viruses", which can cause large-scale disruption in terms of device loading and loss of data. Known methods applied to virus detection maintain a library of known viruses, together with software for searching for these known viruses (e.g. McAfee™ and Dr Solomons ™, generally referred to as "anti-viral" software). These methods essentially perform analysis of byte-signatures of files in order to identify files having signatures corresponding to the known viruses.

A problem with these known approaches is that they are reactive - if a virus arrives at one of the hosts, say H1, then typically only if the virus has been seen before (and assuming that the host H1 has installed anti-viral software in respect of that virus) will the anti-viral software be effective. Thus, if host H1 were to receive an email that spawned a virus hitherto unseen, it would cause harm to the host H1, as there is currently no reliable means of detecting and halting the virus activity until it has been identified - i.e. after it has caused harm.

Embodiments of the invention are concerned with proactively detecting email viruses, and make use of a crucial realisation that the spread of, and thus damage due to, email viruses is dependent on transmission from one machine to other machines. As email traffic can be monitored, features of the viral transmission can potentially be detected before they cause significant damage.

In particular, embodiments look at the macroscopic behaviour of email traffic, by employing a method and apparatus for monitoring states of email network traffic, in order to identify aberrant behaviour.

### Overview of embodiments of the invention

Essentially embodiments analyse previously seen email data in order to identify a plurality of classification groups, or profiles, each of which is indicative of particular type of email behaviour, e.g. embodiments gather email data over a plurality of time periods, and group the data into a plurality of profiles, each of which is representative of certain types of email behaviour - e.g. normal activity profile (P1), busy activity profile (P2), fast spreading virus profile (P3), slow spreading virus profile (P4) and "chain mail" profile" (P5).

When new email data arrives, embodiments attempt to classify the email data into one of the known profiles P1...P5. If the data falls within one of the known profiles P1...P5, a predetermined action can be carried out - e.g. in some embodiments, there is additionally some means of alerting a system administrator, or a further diagnostic application, if the email data is of type P3 or P4. Thus advantages of embodiments include an ability to identify abnormal behaviour at an earlier stage of viral propagation than is possible with current methods.

Embodiments also include means for visualising email activity, essentially to visualise the distribution of email traffic around the network. Advantageously this enables a system administrator, who typically has considerable experience of the nature of email traffic, to visually identify unusual behaviour.

### First embodiment

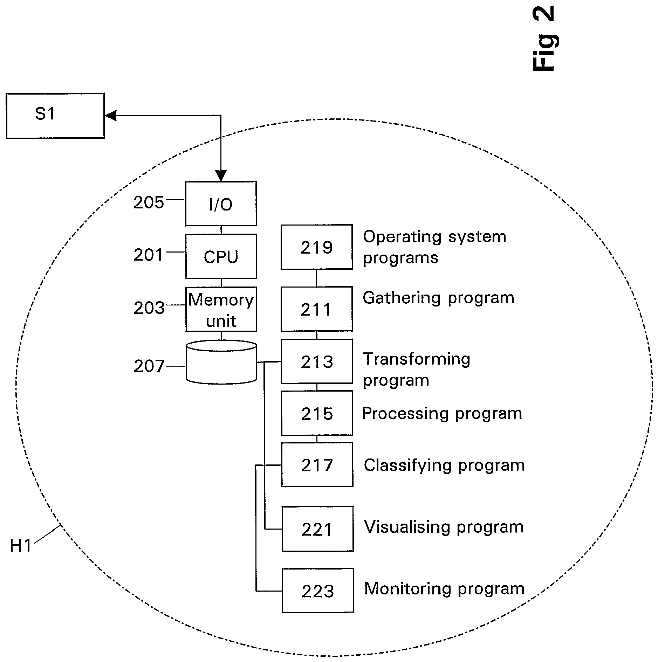

Referring to Figure 2, a first embodiment of the invention will now be discussed in more detail.

Figure 2 shows a host H1 comprising a central processing unit (CPU) 201, a memory unit 203, an input/output device 205 for connecting the host H1 to the network 100, storage 207, and a suite of operating system programs 219, which control and co-ordinate low level operation of the host H1. Such a configuration is well known in the art.

Generally embodiments of the invention are referred to as a virus detector 200, and comprise at least some of programs 211, 213, 215, 217, 221, 223. These programs are stored on storage 207 and are processable by the CPU 201.

The programs include a program 211 for gathering data, a program 213 for transforming the gathered data, and a program 217 for classifying the processed data. In addition, embodiments can include a program 215 for processing the transformed data, a program 221 for visualising the transformed data, and a program 223 for monitoring output of the classifying program 217. These programs 215, 221, 223 are described in more detail below.

The gathering program 211 collects unprocessed email data, typically accessible from either a log file L1 accessible from a firewall arrangement F1, or from processes embedded in the email network whose purpose it is to gather such data (not shown).

The transforming program 213 receives, as input, the gathered email data, and transforms it into a representation D1, and the classifying program 217 receives, as input, the representation D1 and inputs the representation D1 into a classifier. Suitable classifiers include any supervised learning means - e.g. a neural network, a pattern matcher etc. These are described in more detail below.

Depending on the form of the representation D1 and the classifier utilised in the classifying program 217, the processing program 215 may be used to pre-process the representation D1, in order to transform it into a form that can be handled by the classifying program 217.

In addition the visualising program 221 can be used to visualise the representation D1.

The virus detector 200 could alternatively run on an email server S1, or as a purpose-built device embedded in the network.

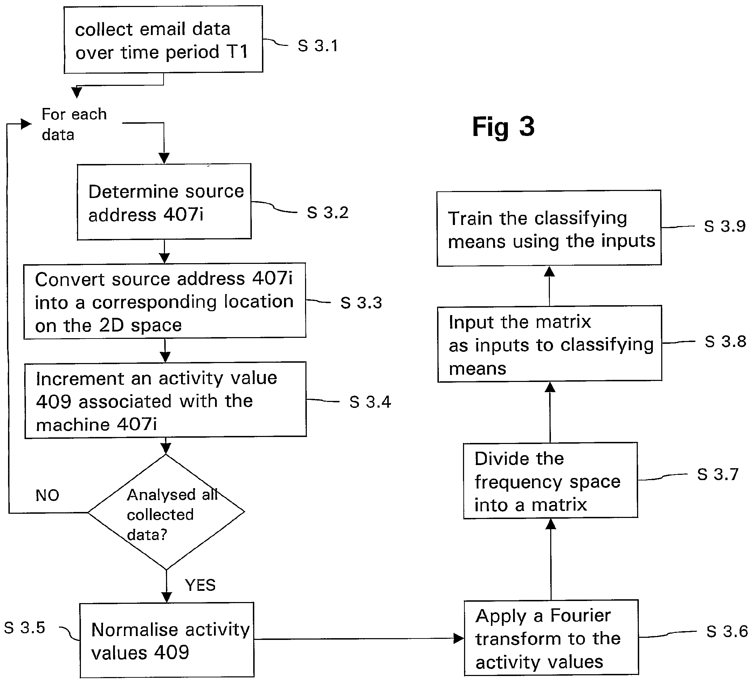

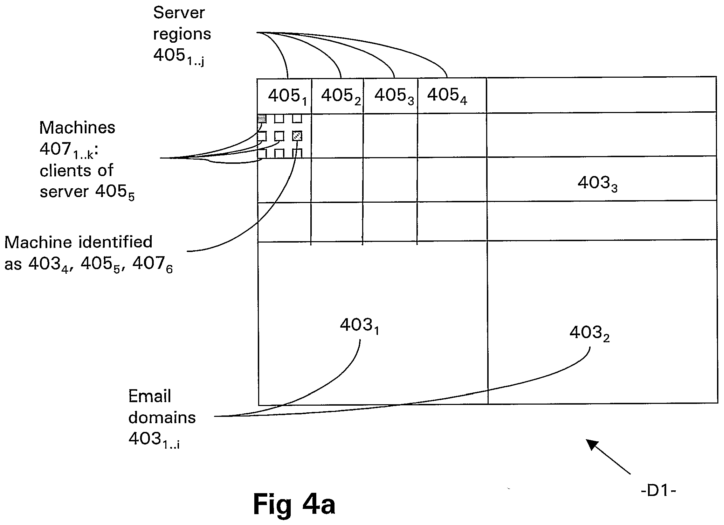

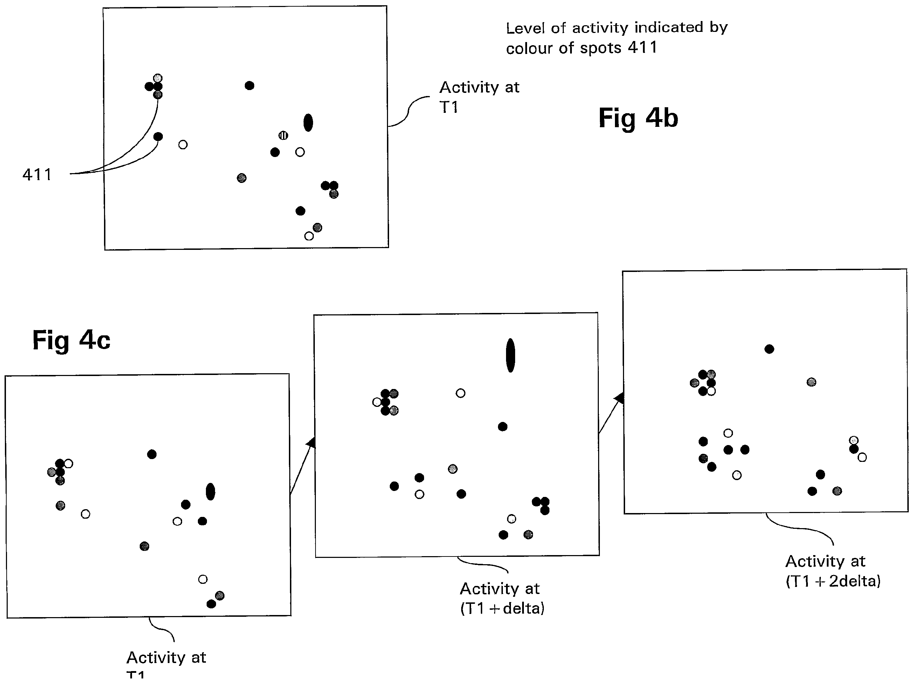

The operation of the viral detector 200, according to this first embodiment of the invention, will now be described with reference to the flowchart shown in Figure 3 and the schematic diagrams shown in Figures 4a, 4b and 4c.

At step S3.1, the gathering program 211 collects email data from the log file L1. Typically the gathering program 211 collects email data falling within a predefined time period T1. Next, the transforming program 213 arranges the collected data into a representation D1, as a function of source address of the collected data, e.g. either of internet-style address (scooby@scoobydoo.com), machine name (MYPC03 on server SERVERO1), machine IP address (132.146.196.67) or user name associated with a machine or server name (User: JEDI, Machine: MYPC03).

Any distinguishing address can be used, provided it enables some sort of topological representation of machines in the network 100, whereby related addresses are positioned closer together than unrelated addresses. In this context *related* can mean connected, over a network - e.g. email clients connected to an email server are both *related* to one another and to the email server.

Thus for each item of collected data, at step S 3.2 the transforming program 213 determines a source address corresponding thereto; and at step S 3.3 the transforming program 213 converts the source address into a corresponding location in the network topology, and thus machine 407i (where i identifies a specific machine), in the representation D1.

Figure 4a shows a two-dimensional (2D) visual representation of one possible representation D1. Thus Figure 4a is a visual representation of connectivity between email client machines and email servers, where:
- email domains 403_{1...i}, which correspond to server regions that are part of a logical email domain;
- server regions 405_{1..j}, which correspond to a server (e.g. S1 having name SERVER01) within a server region 403ᵢ; and
- machines 407_{1..k}, each of which corresponds to a machine (e.g. H1 having name MYPC03) that is a client of a server 405j.

Additionally the machines 407_{1..k} could be further arranged (and visualised) in accordance with their alphabetic names within a corresponding server region 405j (e.g. first letter of name determines position left-to-right within region and second letter determines position top-to-bottom within region).

Positions of machine addresses need not necessarily be unique; within a particular server region 405j it may be useful to aggregate several machines 407_{1...k} therein into a single location, especially when there are many client machines in total in (say) a corporate email network.

Next, at step S 3.4, for each machine (which can be identified as 403ᵢ, 405ⱼ, 407ₖ (see Figure 4a)), the transforming program 213 calculates a value representative of email activity associated therewith. This value, described hereinafter as activity value 409, essentially quantifies how many email packets have emanated from each machine, and is calculated by summing the number of packets originating from a machine. Each calculated activity value 409 is then added to the representation D1 at a corresponding machine location in the network topology, thereby generating a distribution of email activity levels over the network topology representation D1.

Preferably, at step S 3.5, the activity values 409 are normalised. This normalisation could be linear, e.g. activity values could be normalised by the maximum activity level and recorded into a range [0, 1.0], or could be non-linear, e.g. logarithmic.

The visualising program 221 can be used to visualise the output of step S 3.5, i.e. the levels of activity at individual machines 407ₖ. One such output is shown in Figure 4b, which represents email activity during the time period T1: dark spots 411 indicate one, or a cluster of, machines that have been sending emails (in this particular set of collected data), while white areas indicate machine(s) that have/has not sent any emails. (Note that, given the scale of Figure 4b and the distance between machines 407ₖ, activity levels can appear to coagulate into larger spots).

In this embodiment, the darkness of the spots is graded in accordance with level of activity, so that the darkest spots represent a maximum level of activity, white areas represent zero activity, and grey scales indicate levels of activity between 0 and 1.

Alternatively, activity could be represented in a binary form, where any level of activity is assigned a dark spot, and zero activity is assigned a white spot.

Subsequently the processing program 215 converts the representation D1 into a format that is suitable for classification. As stated above, the processing program 215 is not essential to all embodiments of the invention, but in the present embodiment, where the representation D1 is a topological representation of connectivity between devices, such a conversion is required. Essentially an overall distribution, rather than exact locations of machines (and activity at those machines), is more amenable to classification.

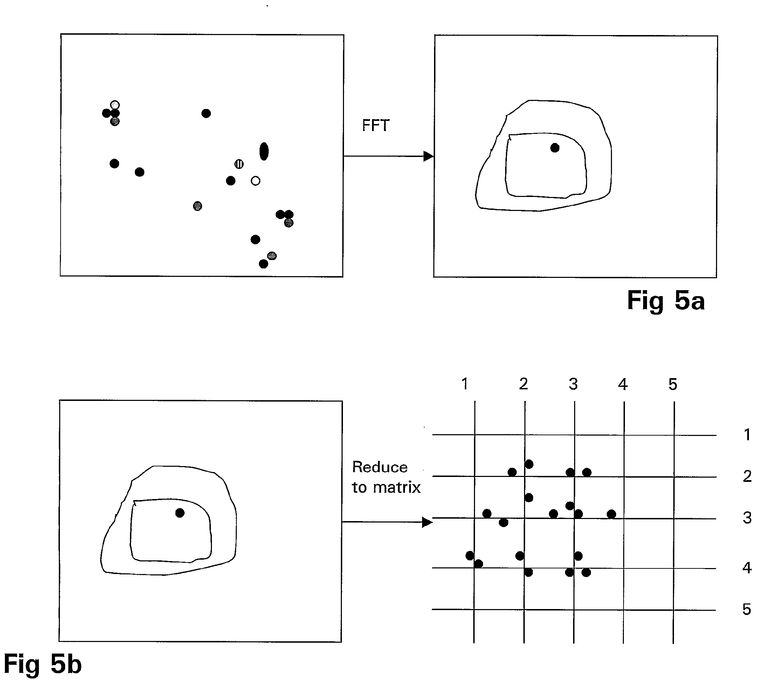

Thus at step S 3.6 the processing program 215 applies a Fourier transform to the distribution of activity (shown in Figure 4b), thereby generating a frequency based representation of the activity distribution, as shown in Figure 5a. The Fourier transform is well known to those skilled in the art, and is one of several methods that could be applied to convert the topological representation. For more details of the Fourier transform, the reader is referred to *"*A Student's Guide to Fourier Transforms: With Applications in Physics and Engineering" J. F. James, Cambridge Univ Pr (Sd); ISBN: 0521462983.

Next, at step S 3.7, the processing program 215 divides the frequency space into a matrix, such as that shown in Figure 5b, which in the present exemplifying example is a 5x5 matrix. The processing program 215 may apply a subsampling or bootstrap method to convert the Fourier Transform representation to a matrix form. Subsampling methods are so-called "re-sampling statistical methods" and are known for their use in sampling a range of image types, including Magnetic Resonance Images (MRI), and frequency space representations. For information relating to subsampling, particularly in the frequency domain, the reader is referred to Chapter 3 of "wavelets and filter banks" by Strang and Nguyen ISBN 0-9614088-7-1 Wellesley-Cambridge Press, Box 812060, Wellesley MA 02181, or more generally to *"*Subsampling" (Springer Series in Statistics) by Dimitris N. Politis, Joseph P. Romano, Michael Wolf.

An advantage of dividing the frequency space in this manner is that the processed data are then arranged in a convenient format for classification.

Subsequently the classifying program 217 trains a classifier to classify the processed data. The classifying program 217 may utilise one of many different types of classifiers that is capable of being trained by supervised learning - e.g. a neural network, a statistical classifier, a pattern recogniser etc., each of which is well known to those skilled in the art. Essentially these classifiers are trained using a training set of "known" input and output pairs, in order to learn a mapping from input to output. The reader is referred to *"*Machine Learning", T. M. Mitchell, McGraw-Hill 1997 for further information.

In embodiments of the present invention, the "known" input is the type of email behaviour corresponding to the email data collected during time period T1. Typically an experienced system administrator identifies characteristics of email data circulating around the network 100 within a time period Tᵢ, and labels the data accordingly. For example, assume that during time period T1 the network 100 was known to be behaving "normally", and that during a second time period T3, the network was known to be suffering from a viral attack such as the Melissa virus, or Lovebug, which is a fast spreading type of virus. A system administrator would label data travelling over the network during time period T1 as "normal email behaviour" (P1); this is then the "known" output for the email data collected over time period T1.

The classifying program 217 thus inputs the matrix data corresponding to this time period T1 to the classifier and trains the same to generate an output corresponding to profile P1 (normal email behaviour). In the same way, email data collected (step S 3.1) during a second time period T3, when the network 100 was known to be suffering from a fast spreading viral attack, is processed as described above (steps S 3.2 - S 3.7), and the classifier is trained to generate an output corresponding to profile P3 for this matrix data.

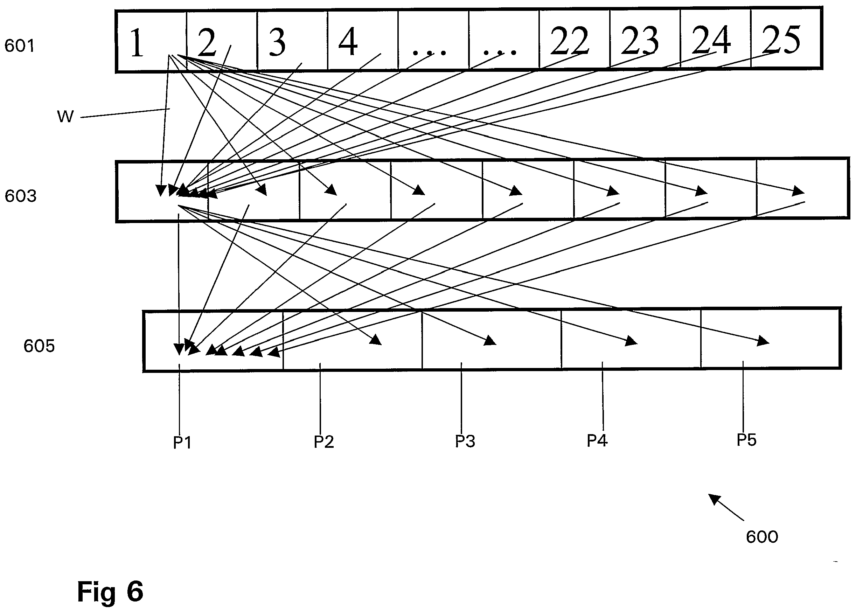

Thus at step S 3.8, in the present exemplifying example, the classifying program 217 receives as input a 5x5 matrix, which is essentially 25 inputs, and inputs these to a feed forward multi layer perceptron (MLP) neural network. Referring to Figure 6, the MLP 600 can comprise an input layer 601 having 25 input nodes, each corresponding to an element in the matrix, a hidden layer 603 having 8 nodes, and an output layer 605 having 5 nodes. Each of the nodes in the input layer 601 have a one-to-all connection with each node in the hidden layer 603, and each of the nodes in the hidden layer 603 have a one-to-all connection with each node in the output layer 605, as is shown in Figure 6. There are adjustable weights (referred to generally as W in Figure 6 for clarity) on the inter-node connections. The choice of number of nodes in the hidden and output layers 603, 605 is a design choice that would be apparent to one skilled in the art.

At step S 3.9 the classifying means 217 trains the MLP 600 to generate the "known" output. Essentially the matrix is input to the input layer, and used to adjust weights between nodes in the layers 601, 603, 605 over multiple training iterations. For a MLP such as that shown in Figure 6, a well-known training algorithm is the back-propagation algorithm, which "feeds back" errors between a desired output and outputs produced by the MLP 600, and inter-node weights W are adjusted so as to reduce these errors. Such a training method is well known to those skilled in the art, and is described in the above referenced book.

Clearly confidence in the ability of the MLP 600 to correctly classify unseen data is dependent on the way in which the MLP 600 has been trained, and this ability broadly scales with number of data used to train the MLP. Thus, for each of the "known" types of email behaviour, data from a plurality of time periods Tᵢⱼ (where subscript i refers to type of email behaviour and subscript j refers to a time period during which data is collected) that is known to behave in accordance with that email behaviour, are used to train the MLP 600. In summary, preferably steps S 3.1 - S 3.9 are repeated ixj times, for j sets of data corresponding to each type of "known" email behaviour i.

Having repeated steps S 3.1 - S 3.9 as described above, each of the nodes in the output layer 605 will represent one of the profiles Pᵢ described above: e.g. normal activity profile (P1), busy activity profile (P2), fast spreading virus profile (P3), slow spreading virus profile (P4) and "chain mail" profile (P5). Once the MLP 600 has been trained, it can be used to classify unseen data - typically data captured over a particular time period. The virus detector 200 will process the unseen data in accordance with steps S 3.1 - S 3.8, but rather than training the MLP 600 using the unseen data, as per step S 3.9, the classifying program 217 will use the classifier 600 to classify each of the unseen data. Typically, for each of the unseen data, the MLP 600 will generate a distribution across the output layer 605 - i.e. each of the 5 nodes will have some value. An unseen data is assigned to whichever node has the highest value; as each node represents one of the profiles P1 ..P5, the unseen data is correspondingly classified.

One of the advantages of classifying by "rate of email propagation" (profiles P3 and P4) is that, irrespective of the specific nature of the virus, embodiments can identify behaviour that spawns a particular rate of email propagation. As stated above, one of the key features of viruses is that they rely on email to spread - thus monitoring the *rate* of email propagation is probably a reliable indicator of aberrant email activity.

Embodiments can additionally include a program 223, which monitors the nodes on the output layer 605 in order to generate an alert should any items of unseen data be classified as some sort of virus (e.g. P3, P4, P5). Preferably the type of alert generated should be dependent on the classification. Thus, for example, if email behaviour is classified as profile P3 ("fast viral spread"), a draconian response, such as shutting down part of the network, could be activated; if email behaviour is classified as profile P4 ("slow/benign virus spread") a response such as "strip all attachments of type X from email messages", could be activated; and if email behaviour is classified as profile P5 ("chain mail), all email users may be sent a warning message, requesting them not to forward the email.

### Second embodiment

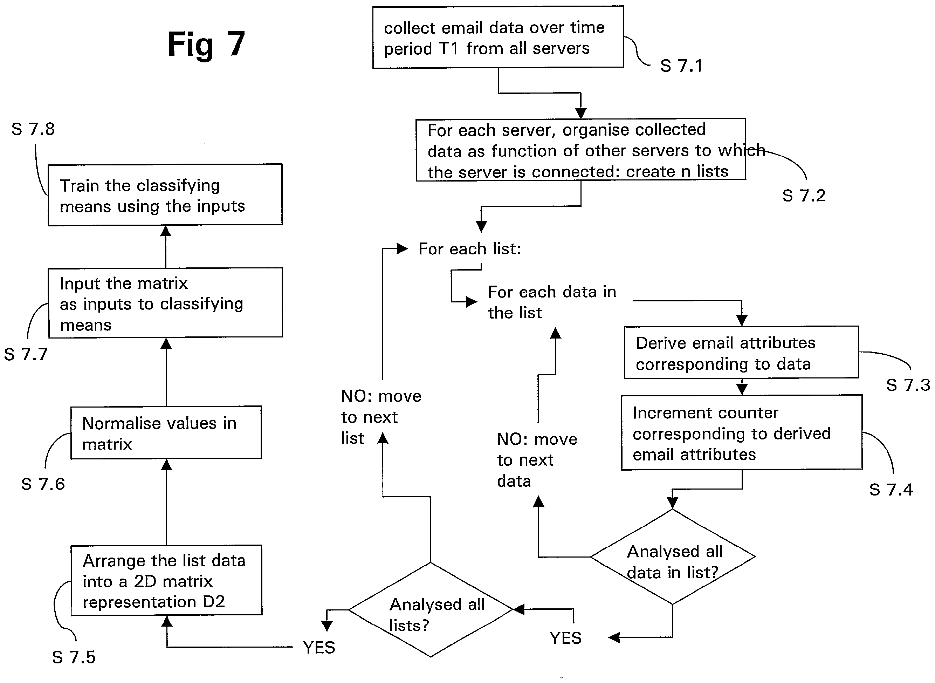

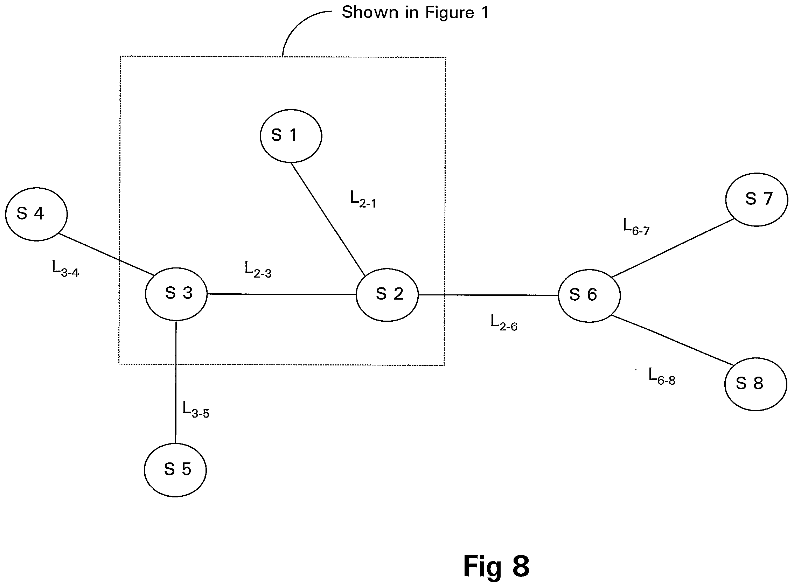

A second embodiment is now described with reference to the flowchart shown in Figure 7 and the schematic diagram shown in Figure 8. The second embodiment is generally similar to that of Figures 1, 2 and 6 in which like parts have been given like reference numerals and will not be described further in detail.

Firstly, the gathering program 211 collects data representative of email traffic flowing within the network 100. Referring to Figure 8, this is essentially equivalent to collecting data representative of emails travelling over links Lᵢ₋ⱼ. Thus at step S 7.1 data that is indicative of email traffic that has passed through servers S1..S8 during a predetermined time period T1 is collected from each of the said servers.

At step S 7.2, the gathering program 211 organises items of the collected data as a function of server on which the item of data is stored, and thence as a function of server to which any given server is connected. For example, referring again to Figure 8, considering server S2, the data collected therefrom are organised into 3 lists, a first corresponding to link L₂₋₆, a second corresponding to link L₂₋₃, and a third corresponding to link L₂₋₁.

Assuming each server S1...S8 maintains a record of all incoming and outgoing emails, once the data collected from server S2 have been analysed, there is no need to analyse the data on server S1 because in this example server S1 is only connected to server S2, and thus only stores the same information relating to link L₂₋₁ that has been analysed for server S2. However, the data collected from servers S3 and S6 will need further analysis, because these servers S3, S6 are each connected to other email servers, S4, S5 and S7, S8 respectively. At the end of step S 7.2 there will be 7 lists, each corresponding to a link.

Each list has a number of columns therein, each representing a distinguishing email characteristic, referred to as an email attribute (ATT), such as size of email; presence or absence of attachments; predefined sub-domain of the network 100; and/or other characteristics that will be apparent to one skilled in the art. If, upon analysis of an email, the email is identified as having an attribute, a counter value corresponding to that attribute is incremented.

Thus at step S 7.3, for each list, each item of data therein is analysed to derive email attributes corresponding thereto, and at step S 7.4 counter values corresponding to whichever attributes have been derived for the item of data are incremented.

For example, if the attributes, and thus columns in the list, are: number of emails transferred over link; emails with Visual Basic ™ attachment; emails of size> 1 MB, at the end of analysis of all data in all lists, a list corresponding to Link L₂₋₃ may comprise the following:

| LIST (LINK) | ATT 1 | ATT2 | ATT3 |
|---|---|---|---|
| | (total number of emails transferred over the link) | (total number of emails transferred over the link with a visual basic attachment present) | (total number of emails transferred over the link which are larger than 1M bytes) |
| L2-3 | 300 | 112 | 15 |

At step S 7.5, the transforming program 213 arranges the list data into a two-dimensional (2D) representation D2, where a first dimension represents link between servers Lᵢ₋ⱼ and a second dimension represents attributes used to characterise emails passing over the link (ATT1, ATT2, ATT3 etc.). As can be seen from Figure 8, in this particular embodiment the number of links is 7. Taking the number of attributes to be 3, D2 is a 3x7 matrix 801. It is understood that any number of attributes (n), could be used, so that, for p links, D2 is generally an nxp matrix.

Preferably, at step S 7.6, the matrix values are normalised. In the present embodiment the processing program 215 is not required because representation D2 is already in a format that is amenable to classification.

Next the classifying program 217 classifies the processed data. As for the first embodiment, the classifying program 217 may utilise one of many different types of classifiers that is capable of being trained by supervised learning - e.g. a neural network, a statistical classifier, a pattern recogniser etc., each of which, as described with respect to the first embodiment, is well known to those skilled in the art.

Thus at step S 7.7, in the present exemplifying example, the classifying program 217 receives as input a 3x7 matrix, which is essentially 21 inputs, and inputs these to a feed forward multi layer perceptron (MLP) neural network, as described with respect to the first embodiment. Referring again to Figure 6, in the second embodiment the MLP 600 can comprise an input layer 601 having 21 input nodes, each corresponding to an element in the matrix, a hidden layer 603 having 8 nodes, and an output layer 605 having 5 nodes.

At step S 7.8 the classifying means 217 trains the MLP 900 using the inputs as described above in respect of the first embodiment.

### Additional details and other embodiments

Embodiments could additionally be used to analyse data over *successive* time periods, T, T+δT T+2δT, etc., where T is a first time period and T+δT, T+2δT are respectively, successive time periods following T, in which case the visualising program 221 could visualise corresponding successive representations of email activity, such as those shown in Figure 4c. This would permit the dynamics of email activity to be observed, which itself could assist in identifying abnormal email activity and/or email server loading.

As an alternative to collecting email traffic flowing over links Lᵢ₋ⱼ, data flowing through the servers could be collected, i.e. independent of the path taken by the emails to and/or from a server. Characterising email traffic in this way is likely to be more efficient than the method described in the second embodiment, because step S 7.2 simply comprises organising the data as a function of server on which the email data is stored. In this embodiment there will be 8 lists, each of which corresponds to a server. Steps S 7.3 - S 7.7 are carried out as described above.

The selection of the time period T1, over which data is collected, is important, because viruses spread at different rates, and, in order to identify different classes of behaviour, it may therefore be necessary to collect data over a range of time periods T1. For example a first type of virus could potentially spread automatically on receipt of email, leading to a very fast machine/network time spread, and a second type of virus could spread in human time i.e. dependent on a human reader opening an email attachment before the infection can spread, thereby having a time period T1 of the order of minutes or hours or days.

Embodiments may be modified to have different classifiers, each assigned to a particular time period T1 - i.e. emails collected in one time period T1ₐ may be classified by a first Classifier, Cₐ, and emails collected in a second time period T1_{b} may be classified by a second Classifier, C_{b}. Each classifier is likely to detect different types of email behaviour.

The duration of these time periods T1ₐ and T1_{b} can be determined experimentally.

The classifying program 217 could be hard wired - e.g. a neural network computer chip.

In the afore-described embodiments data are organised as a function of source addresses of emails, i.e. data collected from the log file L1 (or, in the second embodiment, the files stored on servers S1 ..n) are transformed into a representation D1, D2 as a function of source (email or machine) address. Alternatively or additionally the data could be represented as a function of destination address; if the data were represented as a function of both source and destination address, both parameters (source and destination addresses) could be joined, side-by-side.

The current embodiments assume that, for each time period T1, all of the data in the log file L1 or servers S1...Sn are used to classify email behaviour. As an alternative, and particularly if processing load were a problem, every nth email entry could be selected for processing, where the value of n is selected at random.

As an alternative to being attached to the firewall F1, the Log file L1 could be accessible to one of the email servers S1....S7; as an additional alternative, and dependent on the configuration of the network 100, data could be collected from a plurality of log files.

The embodiments described above utilise "supervised training" classifiers, which means that it is assumed that there is adequate training data to train for each (manually predetermined) class of email activity of interest. As a result the classifier would not identify any new (untrained) behaviour in this model, but would try to classify it into one of the predetermined profiles P1...P5.

As an alternative, and in order to autonomously identify new profiles Pi, the classifying program 217 could include "unsupervised learning" means, such as a Kohonen Network. Such an unsupervised learning means identifies new profiles via a self-organising process, and modifies the possible profiles into which behaviour can be classified accordingly.

As will be understood by those skilled in the art, the invention described above may be embodied in one or more computer programs. These programs can be contained on various transmission and/or storage mediums such as a floppy disc, CD-ROM, or other optically readable medium, or magnetic tape so that the programs can be loaded onto one or more general purpose computers or could be downloaded over a computer network using a suitable transmission medium.

The programs 211, 213, 215, 217, 221, 223 of the present invention are conveniently written using the C programming language, but it is to be understood that this is inessential to the invention.

## Claims

1. A method of identifying behaviour patterns indicative of viral transmissions in respect of a system that operates over a communications network, the system comprising a plurality of server computers and client computers, wherein at least some of the server computers are arranged to deliver data items to, and receive data items from, one or more client computers over the communications network,
the method comprising the steps of:
(a) receiving data in respect of data items which have been sent within the system, each of the received data identifying the computer, within the system, to and/or from which the said data item has been sent;
(b) organising the received data into a representation indicative of the distribution of data items sent within the system, as a function of the identified computer; and
(c) using the representation to train a classification means to recognise a plurality of behaviour types.

2. A method according to claim 1, including transforming the representation into a format suitable for input into the classification means.

3. A method according to claim 1 or claim 2, in which step (b) comprises creating a topological representation of the server and client computers in the system, and the method includes, for each received data,
incrementing a counter representative of a level of activity associated with the identified computer; and
adding an identifier, which is indicative of a level of activity, to whichever part of the topological representation corresponds to the identified computer, thereby creating a representation indicative of a distribution of data items sent within the system.

4. A method according to claim 3, in which said topological representation comprises
a plurality of regions, each of which is representative of an area of the network,
a plurality of sub-regions, each of which is representative of a server computer within a corresponding area of the network, and
a plurality of sub-sub regions, each of which is representative of a client computer acting as a client to a corresponding server computer; and
in which the step of adding an identifier to whichever part of the topological representation corresponds to the identified computer involves adding an identifier to whichever sub region or sub-sub region corresponds thereto.

5. A method according to claim 3 or claim 4, in which the level of activity is normalised over the topological representation.

6. A method according to claim 5, wherein the transforming step comprises transforming the representation into a frequency representation of activity; and converting the frequency representation into a vector, which vector is suitable for input into a classification means.

7. A method according to claim 6, in which the step of transforming the representation into a frequency representation comprises applying a Fourier transform to the said representation.

8. A method according to claim 6 or claim 7, in which the step of converting the frequency representation into a vector comprises sampling the frequency representation in order to extract vector values corresponding thereto.

9. A method according to claim 1 or claim 2, in which the received data additionally identify attributes of the data items sent within the system,
and in which step (b) comprises the steps of
creating a plurality of lists, each of which corresponds to a link between server machines in the system; and
for each received data:
identifying a link over which the corresponding sent data item has passed;
identifying a list corresponding to the identified link;
identifying attributes of the data item; and
for each identified attribute, incrementing a counter corresponding thereto in the identified list.

10. A method according to claim 9 when dependent on claim 2, in which the transforming step comprises creating a vector comprising at least some of the lists, which vector is suitable for input into a classification means.

11. A method according to any one of claims 2 to 10, in which data is received in respect of a plurality of time periods, and the organising and transforming steps are performed for the said plurality of the said time periods, thereby generating a plurality of transformed representations for inputting to the classification means.

12. A method according to claim 11, in which the method is carried out for a plurality of different size time periods, so that there are a plurality of behaviour types for each size of time period.

13. A method according to claim 12, in which, for each size time period, a different respective classification means is used.

14. A method according to any one of the preceding claims, wherein the data item being received is an email, and the aberrant behaviour to be identified is email viruses propagating through the network.

15. A method according to claim 14, in which the receiving step (a) includes collecting received data from any one of a log file being part of a firewall arrangement, or a log file accessible from an email server machine, or a plurality of log files accessible from a plurality of email server machines.

16. A method according to any one of the preceding claims, including arranging the received data into groups of received data as a function of type of sent data items.

17. Apparatus for identifying aberrant behaviour indicative of viral transmissions in respect of a system that operates within a communications network, the system comprising a plurality of server computers and client computers, wherein each server computer is arranged to deliver data items to, and receive data from, one or more client computers over the communications network, the apparatus comprising
receiving means arranged to receive data in respect of data items which have been sent within the system, each of the received data identifying the computer, within the system, from and/or to which the said data item has been sent during a time period;
means operable to arrange the received data into groups of received data as a function of type of sent data items, so that each group represents a type of behaviour;
organising means arranged to organise received data in each group into a representation indicative of a distribution of data items sent within the system, as a function of identified computer during the time period; and
a classification means operable to receive the representation as input and operable to generate an output representative of a behaviour type corresponding to the relevant group.

18. Apparatus according to claim 17, including transforming means arranged to transform the representation into a format suitable for input into a classification means.

19. Apparatus according to claim 18, wherein the receiving means is in operative association with means operable to retrieve received data from any one of a log file being part of a firewall arrangement, or a log file accessible from a server machine, or a plurality of log files accessible from a plurality of server machines.

20. Apparatus according to claim 18 or claim 19, wherein the organising means comprises means arranged to create a representation indicative of a level of activity of server and client computers of the system.

21. Apparatus according to claim 20, wherein the transforming means includes means operable transform the representation into a frequency representation.

22. Apparatus according to claim 21, wherein the transforming means includes means operable to apply a Fourier transform to the representation, thereby generating the frequency representation.

23. Apparatus according to claim 17, including means arranged to analyse data items passing through at least some of the server computers and to identify attributes associated with the analysed data items, wherein received data in respect of the analysed data items identifies the said server computer and identified attributes.

24. Apparatus according to any one of claims 17 to 23, wherein the classification means comprises any one of a neural network, a statistical classifier or a pattern recogniser.

25. Apparatus according to claim 24, wherein, when the classification means comprises a neural network, the said neural network comprising at least
an input layer comprising a plurality of input nodes,
a hidden layer comprising a plurality of hidden nodes, which hidden layer is in operative association with the input layer, and
an output layer comprising a plurality of output nodes, which output layer is in operative association with the hidden layer,
wherein each of the output nodes corresponds to a type of behaviour.

26. Apparatus according to any one of claims 17 to 25, wherein the received data is email data, and the aberrant behaviour to be identified is email viruses propagating through the network.

27. Apparatus according to claim 26, wherein at least some of the output nodes correspond to rates of email virus propagation.

28. Apparatus according to any one of claims 17 to 27, further including alerting means arranged in operative association with at least some of the output nodes and operable to generate one of a plurality of alert outputs in dependence on activation of output nodes.

29. An email activity device for use in identifying email viruses, the device being located in a network and operable to communicate with other devices in the network, comprising
retrieving means operable to retrieve data representative of email traffic, during a time period, from any one of: a log file being part of a firewall arrangement, or a log file accessible from an email server machine, or a plurality of log files accessible from a plurality of email server machines;
organising means arranged to organise the retrieved data into a representation indicative of a distribution of the said email traffic during the period;
transforming means arranged to transform the representation into a format suitable for input into a classification means; and
a classification means operable to receive the transformed representation as input and operable to generate an output representative of a type of email traffic.

## Patentansprüche

1. Verfahren zur Identifizierung von Verhaltensmustern, die Virus-Übertragungen in Bezug auf ein System anzeigen, das über ein Kommunikations-Netzwerk betrieben wird, wobei das System eine Vielzahl von Server-Computern und Client-Computern umfasst, wobei zumindest einige der Server-Computer dazu eingerichtet sind, über das Kommunikations-Netzwerk Datenelemente an einen oder mehre Client-Computer zu liefern und Datenelemente von einem Client-Computer oder mehreren Client-Computern zu empfangen, wobei das Verfahren die folgenden Schritte umfasst:
(a) Empfangen von Daten in Bezug auf Datenelemente, die innerhalb des Systems gesendet wurden, wobei die jeweiligen empfangenen Daten den Computer innerhalb des Systems identifizieren, zu dem und/oder von dem die Daten gesendet wurden,
(b) Organisieren der empfangenen Daten in einer Darstellung, welche die Verteilung von Datenelementen, die innerhalb des Systems gesendet wurden, als Funktion des identifizierten Computers anzeigt,
und
(c) Verwenden der Darstellung zum Trainieren einer Klassifizierungseinrichtung zur Erkennung einer Vielzahl von Verhaltenstypen.

2. Verfahren nach Anspruch 1, das die Umwandlung der Darstellung in ein Format beinhaltet, das zur Eingabe in die Klassifizierungseinrichtung geeignet ist.

3. Verfahren nach Anspruch 1 oder Anspruch 2, bei dem Schritt (b) die Erzeugung einer topologischen Darstellung der Server- und Client-Computer in dem System umfasst und das Verfahren beinhaltet: für die jeweiligen empfangenen Daten Inkrementieren eines Zählers, der für ein dem identifizierten Computer zugeordnetes Aktivitätsniveau repräsentativ ist, und Hinzufügen eines Identifikators, der ein Aktivitätsniveau anzeigt, zu einem Teil der topologischen Darstellung, der dem identifizierten Computer entspricht, wodurch eine Darstellung erzeugt wird, die eine Verteilung von Datenelementen anzeigt, die innerhalb des Systems gesendet wurden.

4. Verfahren nach Anspruch 3, bei dem die topologische Darstellung umfasst:
eine Vielzahl von Regionen, von denen jede für einen Bereich des Netzwerks repräsentativ ist,
eine Vielzahl von Unter-Regionen, von denen jede für einen Server-Computer innerhalb eines entsprechenden Bereichs des Netzwerks repräsentativ ist, und
eine Vielzahl von Unter-Unter-Regionen, von denen jede für einen Client-Computer repräsentativ ist, der als Client mit einem entsprechenden Server-Computer tätig wird, und
bei dem der Schritt des Hinzufügens eines Identifikators zu einem Teil der topologischen Darstellung, der dem identifizierten Computer entspricht, das Hinzufügen eines Identifikators zu einer Unter-Region oder Unter-Unter-Region beinhaltet, die ihm entspricht.

5. Verfahren nach Anspruch 3 oder Anspruch 4, bei dem das Aktivitätsniveau über die topologische Darstellung normiert wird.

6. Verfahren nach Anspruch 5, bei dem der Schritt der Umwandlung umfasst:
Umwandeln der Darstellung in eine Häufigkeits-Darstellung von Aktivität und Umformen der Häufigkeits-Darstellung in einen Vektor,
wobei der Vektor zur Eingabe in eine Klassifizierungseinrichtung geeignet ist.

7. Verfahren nach Anspruch 6, bei dem der Schritt des Umwandelns der Darstellung in eine Häufigkeits-Darstellung die Anwendung einer Fourier-Transformation auf die Darstellung umfasst.

8. Verfahren nach Anspruch 6 oder Anspruch 7, bei dem der Schritt des Umformens der Häufigkeits-Darstellung in einen Vektor das Sampling der Häufigkeits-Darstellung zur Extraktion von ihr entsprechenden Vektor-Werten umfasst.

9. Verfahren nach Anspruch 1 oder Anspruch 2, bei dem die empfangenen Daten zusätzlich Attribute der innerhalb des Systems gesendeten Datenelemente identifizieren,
und bei dem Schritt (b) die folgenden Schritte umfasst:
Erzeugen einer Vielzahl von Listen, von denen jede einem Link zwischen Server-Maschinen in dem System entspricht, und
für die jeweiligen empfangenen Daten:
Identifizieren eines Links, über den das entsprechende gesendete Datenelement lief;
Identifizieren einer Liste, die dem identifizierten Link entspricht;
Identifizieren von Attributen des Datenelements und
für jedes identifizierte Attribut Inkrementieren eines ihm entsprechenden Zählers in der festgelegten Liste.

10. Verfahren nach Anspruch 9 in Abhängigkeit von Anspruch 2, bei dem der Schritt des Umwandelns umfasst: Erzeugen eines Vektors, der mindestens einige der Listen umfasst, wobei der Vektor zur Eingabe in eine Klassifizierungseinrichtung geeignet ist.

11. Verfahren nach einem der Ansprüche 2 bis 10, bei dem Daten in Bezug auf eine Vielzahl von Zeitspannen empfangen werden und die Schritte des Organisierens und des Umwandelns für diese Vielzahl der Zeitspannen durchgeführt werden, wodurch eine Vielzahl von umgewandelten Darstellungen zur Eingabe in die Klassifizierungseinrichtung erzeugt werden.

12. Verfahren nach Anspruch 11, wobei das Verfahren für eine Vielzahl von Zeitspannen unterschiedlicher Größe durchgeführt wird, so dass eine Vielzahl von Verhaltenstypen für jede Größe der Zeitspanne vorliegen.

13. Verfahren nach Anspruch 12, bei dem für die Zeitspanne jeder Größe eine unterschiedliche entsprechende Klassifizierungseinrichtung verwendet wird.

14. Verfahren nach einem der vorhergehenden Ansprüche, bei dem das Datenelement, das empfangen wird, eine E-Mail ist, und das zu identifizierende ungewöhnliche Verhalten E-Mail-Viren sind, die sich durch das Netzwerk ausbreiten.

15. Verfahren nach Anspruch 14, bei dem der Schritt (a) des Empfangens beinhaltet: Sammeln von empfangenen Daten von einer Log-Datei, die ein Teil einer Firewall-Einrichtung ist, oder einer Log-Datei, die von einer E-Mail-Server-Maschine zugänglich ist, oder einer Vielzahl von Log-Dateien, die von einer Vielzahl von E-Mail-Server-Maschinen zugänglich sind.

16. Verfahren nach einem der vorhergehenden Ansprüche, welches das Anordnen der empfangenen Daten in Gruppen von empfangenen Daten als Funktion des Typs von gesendeten Datenelementen beinhaltet.

17. Vorrichtung zur Identifizierung von ungewöhnlichem Verhalten, das Virus-Übermittlungen in Bezug auf ein System anzeigt, das innerhalb eines Kommunikations-Netzwerks betrieben wird, wobei das System eine Vielzahl von Server-Computern und Client-Computern umfasst, wobei jeder Server-Computer dazu eingerichtet ist, über das Kommunikations-Netzwerk Datenelemente an einen oder mehre Client-Computer zu liefern und Datenelemente von einem Client-Computer oder mehreren Client-Computern empfangen, wobei die Vorrichtung aufweist:
eine Empfangseinrichtung, die dazu eingerichtet ist, Daten in Bezug auf Datenelemente zu empfangen, die innerhalb des Systems gesendet wurden, wobei die jeweiligen empfangenen Daten den Computer innerhalb des Systems identifizieren, von dem und/oder zu dem das Datenelement während einer Zeitdauer gesendet wurde;
eine Einrichtung, die so betreibbar ist, dass sie die empfangenen Daten in Gruppen von empfangenen Daten als Funktion des Typs von gesendeten Datenelementen anordnet, so dass jede Gruppe einen Verhaltenstyp darstellt;
eine Organisationseinrichtung, die dazu eingerichtet ist, empfangene Daten in jeder Gruppe in einer Darstellung zu organisieren, die eine Verteilung von Datenelementen, die innerhalb des Systems gesendet wurden, als Funktion eines identifizierten Computers während der Zeitdauer anzeigt, und
eine Klassifizierungseinrichtung, die so betreibbar ist, dass sie die Darstellung als Eingang empfängt, und so betreibbar ist, dass sie einen Ausgang erzeugt, der für einen Verhaltenstyp repräsentativ ist, welcher der relevanten Gruppe entspricht.

18. Vorrichtung nach Anspruch 17, die eine Umwandlungseinrichtung aufweist, die dazu eingerichtet ist, die Darstellung in ein Format umzuwandeln, das zur Eingabe in eine Klassifizierungseinrichtung geeignet ist.

19. Vorrichtung nach Anspruch 18, bei der die Empfangseinrichtung in einer operativen Verbindung mit einer Einrichtung steht, die so betreibbar ist, dass sie Daten gewinnt, die empfangen wurden von einer Log-Datei, die ein Teil einer Firewall-Einrichtung ist, oder einer Log-Datei, die von einer Server-Maschine zugänglich ist, oder einer Vielzahl von Log-Dateien, die von einer Vielzahl von Server-Maschinen zugänglich sind.

20. Vorrichtung nach Anspruch 18 oder Anspruch 19, bei der die Organisationseinrichtung eine Einrichtung umfasst, die dazu eingerichtet ist, eine Darstellung zu erzeugen, die ein Aktivitätsniveau von Server- und Client-Computern des Systems anzeigt.

21. Vorrichtung nach Anspruch 20, bei der die Umwandlungseinrichtung eine Einrichtung aufweist, die so betreibbar ist, dass sie die Darstellung in eine Häufigkeits-Darstellung umwandelt.

22. Vorrichtung nach Anspruch 21, bei der die Umwandlungseinrichtung eine Einrichtung aufweist, die so betreibbar ist, dass sie eine Fourier-Transformation auf die Darstellung anwendet, wodurch die Häufigkeits-Darstellung erzeugt wird.

23. Vorrichtung nach Anspruch 17, die eine Einrichtung aufweist, die dazu eingerichtet ist, Datenelemente zu analysieren, die durch zumindest einige der Server-Computer laufen, und Attribute zu identifizieren, die den analysierten Datenelementen zugeordnet sind, wobei in Bezug auf die analysierten Datenelemente empfangene Daten den Server-Computer und identifizierte Attribute identifizieren.

24. Vorrichtung nach einem der Ansprüche 17 bis 23, bei der die Klassifizierungseinrichtung ein neuronales Netzwerk, ein statistischer Klassifizierer oder eine Mustererkennungseinrichtung ist.

25. Vorrichtung nach Anspruch 24, bei der, wenn die Klassifizierungseinrichtung ein neuronales Netzwerk aufweist, das neuronale Netzwerk mindestens umfasst:
eine Eingabeschicht, die eine Vielzahl von Eingabeknoten aufweist,
eine verborgene Schicht, die eine Vielzahl von verborgenen Knoten aufweist, wobei die verborgene Schicht mit der Eingabeschicht in operativer Verbindung steht, und
eine Ausgabeschicht, die eine Vielzahl von Ausgabeknoten aufweist, wobei die Ausgabeschicht mit der verborgenen Schicht in operativer Verbindung steht,
wobei jeder der Ausgabeknoten einem Verhaltenstyp entspricht.

26. Vorrichtung nach einem der Ansprüche 17 bis 25, bei der die empfangenen Daten E-Mail-Daten sind und das zu identifizierende ungewöhnliche Verhalten E-Mail-Viren sind, die sich durch das Netzwerk ausbreiten.

27. Vorrichtung nach Anspruch 26, bei der mindesten einige der Ausgabeknoten Raten der Ausbreitung von E-Mail-Viren entsprechen.

28. Vorrichtung nach einem der Ansprüche 17 bis 27, die ferner eine Alarmierungseinrichtung aufweist, die in operativer Verbindung mit mindestens einigen der Ausgabeknoten eingerichtet ist und so betreibbar ist, dass sie einen Alarmausgang einer Vielzahl von Alarmausgängen in Abhängigkeit von einer Aktivierung von Ausgabeknoten erzeugt.

29. E-Mail-Aktivitäts-Vorrichtung zur Verwendung bei der Identifizierung von E-Mail-Viren, wobei die Vorrichtung in einem Netzwerk angeordnet und so betreibbar ist, dass sie mit anderen Vorrichtungen in dem Netzwerk kommuniziert, und umfasst:
eine Gewinnungseinrichtung, die so betreibbar ist, dass sie Daten, die für E-Mail-Verkehr repräsentativ sind, während einer Zeitdauer gewinnt von einer Log-Datei, die ein Teil einer Firewall-Einrichtung ist, oder einer Log-Datei, die von einer E-Mail-Server-Maschine zugänglich ist, oder einer Vielzahl von Log-Dateien, die von einer Vielzahl von E-Mail-Server-Maschinen zugänglich sind,
eine Organisationseinrichtung, die dazu eingerichtet ist, die gewonnenen Daten in einer Darstellung zu organisieren, die eine Verteilung des E-Mail-Verkehrs während der Zeitdauer anzeigt,
eine Umwandlungseinrichtung, die dazu eingerichtet ist, die Darstellung in ein Format umzuwandeln, das zur Eingabe in eine Klassifizierungseinrichtung geeignet ist, und
eine Klassifizierungseinrichtung, die so betreibbar ist, dass sie die umgewandelte Darstellung als Eingang empfängt, und so betreibbar ist, dass sie einen Ausgang erzeugt, der für einen Typ von E-Mail-Verkehr repräsentativ ist.

## Revendications

1. Procédé d'identification de motifs de comportement indicateurs de transmissions virales en ce qui concerne un système qui fonctionne sur un réseau de communications, le système comprenant une pluralité d'ordinateurs serveurs et d'ordinateurs clients, dans lequel au moins certains des ordinateurs serveurs sont agencés pour fournir des éléments de données à, et recevoir des éléments de données de, un ou plusieurs ordinateur(s) client(s) sur le réseau de communications, le procédé comprenant les étapes de :
(a) réception de données en ce qui concerne des éléments de données qui ont été envoyés au sein du système, chacune des données reçues identifiant l'ordinateur, au sein du système, auquel et/ou duquel ledit élément de données a été envoyé ;
(b) organisation des données reçues en une représentation indicatrice de la distribution d'éléments de données envoyés au sein du système, comme une fonction de l'ordinateur identifié ; et
(c) utilisation de la représentation pour former un moyen de classification pour reconnaître une pluralité de types de comportement.

2. Procédé selon la revendication 1, incluant la transformation de la représentation en un format approprié à une entrée dans le moyen de classification.

3. Procédé selon la revendication 1 ou la revendication 2, dans lequel l'étape (b) comprend la création d'une représentation topologique des ordinateurs serveurs et clients dans le système, et le procédé inclut, pour chaque donnée reçue,
l'incrémentation d'un compteur représentatif d'un niveau d'activité associé avec l'ordinateur identifié ; et
l'ajout d'un identifiant, qui est indicateur d'un niveau d'activité, à quelque partie que ce soit de la représentation topologique qui correspond à l'ordinateur identifié, créant ainsi une représentation indicatrice d'une distribution d'éléments de données envoyés au sein du système.

4. Procédé selon la revendication 3, dans lequel ladite représentation topologique comprend
une pluralité de régions, dont chacune est représentative d'une zone du réseau,
une pluralité de sous-régions, dont chacune est représentative d'un ordinateur serveur au sein d'une zone correspondante du réseau, et
une pluralité de sous-sous-régions, dont chacune est représentative d'un ordinateur client agissant comme un client pour un ordinateur serveur correspondant ; et
dans lequel l'étape d'ajout d'un identifiant à quelque partie que ce soit de la représentation topologique qui correspond à l'ordinateur identifié implique l'ajout d'un identifiant à quelque sous-région ou sous-sous-région que ce soit correspondant à celui-ci.

5. Procédé selon la revendication 3 ou la revendication 4, dans lequel le niveau d'activité est normalisé sur la représentation topologique.

6. Procédé selon la revendication 5, dans lequel l'étape de transformation comprend la transformation de la représentation en une représentation fréquentielle de l'activité ; et la conversion de la représentation fréquentielle en un vecteur, lequel vecteur est approprié à une entrée dans un moyen de classification.

7. Procédé selon la revendication 6, dans lequel l'étape de transformation de la représentation en une représentation fréquentielle comprend l'application d'une transformée de Fourier à ladite représentation.

8. Procédé selon la revendication 6 ou la revendication 7, dans lequel l'étape de conversion de la représentation fréquentielle en un vecteur comprend l'échantillonnage de la représentation fréquentielle afin d'extraire des valeurs de vecteur correspondant à celle-ci.

9. Procédé selon la revendication 1 ou la revendication 2, dans lequel les données reçues identifient en outre des attributs des éléments de données envoyés au sein du système,
et dans lequel l'étape (b) comprend les étapes de
création d'une pluralité de listes, dont chacune correspond à une liaison entre des machines serveurs dans le système ; et
pour chaque donnée reçue :
identification d'une liaison sur laquelle l'élément de données envoyé correspondant est passé ;
identification d'une liste correspondant à la liaison identifiée ;
identification d'attributs de l'élément de données ; et
pour chaque attribut identifié, incrémentation d'un compteur correspondant à celui-ci dans la liste identifiée.

10. Procédé selon la revendication 9 lorsqu'elle dépend de la revendication 2, dans lequel l'étape de transformation comprend la création d'un vecteur comprenant au moins certaines des listes, lequel vecteur est approprié à une entrée dans un moyen de classification.

11. Procédé selon l'une quelconque des revendications 2 à 10, dans lequel des données sont reçues en ce qui concerne une pluralité de périodes de temps, et les étapes d'organisation et de transformation sont mises en oeuvre pour ladite pluralité desdites périodes de temps, générant ainsi une pluralité de représentations transformées pour entrée dans le moyen de classification.

12. Procédé selon la revendication 11, dans lequel le procédé est mis en oeuvre pour une pluralité de périodes de temps de tailles différentes, de telle sorte qu'il y a une pluralité de types de comportement pour chaque taille de période de temps.

13. Procédé selon la revendication 12, dans lequel, pour chaque taille de période de temps, un moyen de classification respectif différent est utilisé.

14. Procédé selon l'une quelconque des revendications précédentes, dans lequel l'élément de données étant reçu est un courrier électronique, et le comportement aberrant à identifier est des virus de courrier électronique se propageant à travers le réseau.

15. Procédé selon la revendication 14, dans lequel l'étape de réception (a) inclut le recueil de données reçues d'un quelconque d'un fichier journal faisant partie d'un agencement de pare-feu, ou d'un fichier journal accessible depuis une machine serveur de courrier électronique, ou d'une pluralité de fichiers journal accessibles depuis une pluralité de machines serveurs de courrier électronique.

16. Procédé selon l'une quelconque des revendications précédentes, incluant l'agencement des données reçues en groupes de données reçues comme une fonction de type d'éléments de données envoyés.

17. Appareil pour identifier un comportement aberrant indicateur de transmissions virales en ce qui concerne un système qui fonctionne au sein d'un réseau de communications, le système comprenant une pluralité d'ordinateurs serveurs et d'ordinateurs clients, dans lequel chaque ordinateur serveur est agencé pour fournir des éléments de données à, et recevoir des données de, un ou plusieurs ordinateur(s) client(s) sur le réseau de communications, l'appareil comprenant un moyen de réception agencé pour recevoir des données en ce qui concerne des éléments de données qui ont été envoyés au sein du système, chacune des données reçues identifiant l'ordinateur, au sein du système, duquel et/ou auquel ledit élément de données a été envoyé lors d'une période de temps ;
un moyen utilisable pour agencer les données reçues en groupes de données reçues comme une fonction de type d'éléments de données envoyés, de telle sorte que chaque groupe représente un type de comportement ;
un moyen d'organisation agencé pour organiser des données reçues dans chaque groupe en une représentation indicatrice d'une distribution d'éléments de données envoyés au sein du système, comme une fonction de l'ordinateur identifié lors de la période de temps ; et
un moyen de classification utilisable pour recevoir la représentation comme une entrée et utilisable pour générer une sortie représentative d'un type de comportement correspondant au groupe pertinent.

18. Appareil selon la revendication 17, incluant un moyen de transformation agencé pour transformer la représentation en un format approprié à une entrée dans un moyen de classification.

19. Appareil selon la revendication 18, dans lequel le moyen de réception est en association opérationnelle avec un moyen utilisable pour récupérer des données reçues d'un quelconque d'un fichier journal faisant partie d'un agencement de pare-feu, ou d'un fichier journal accessible depuis une machine serveur, ou d'une pluralité de fichiers journal accessibles depuis une pluralité de machines serveurs.

20. Appareil selon la revendication 18 ou la revendication 19, dans lequel le moyen d'organisation comprend un moyen agencé pour créer une représentation indicatrice d'un niveau d'activité d'ordinateurs serveurs et clients du système.

21. Appareil selon la revendication 20, dans lequel le moyen de transformation inclut un moyen utilisable pour transformer la représentation en une représentation fréquentielle.

22. Appareil selon la revendication 21, dans lequel le moyen de transformation inclut un moyen utilisable pour appliquer une transformée de Fourier à la représentation, générant ainsi la représentation fréquentielle.

23. Appareil selon la revendication 17, incluant un moyen agencé pour analyser des éléments de données passant par au moins certains des ordinateurs serveurs et pour identifier des attributs associés avec les éléments de données analysés, dans lequel des données reçues en ce qui concerne les éléments de données analysés identifient ledit ordinateur serveur et lesdits attributs identifiés.

24. Appareil selon l'une quelconque des revendications 17 à 23, dans lequel le moyen de classification comprend l'un quelconque parmi un réseau neuronal, un classifieur statistique ou un reconnaisseur de motifs.

25. Appareil selon la revendication 24, dans lequel, lorsque le moyen de classification comprend un réseau neuronal, ledit réseau neuronal comprenant au moins
une couche d'entrée comprenant une pluralité de noeuds d'entrée,
une couche cachée comprenant une pluralité de noeuds cachés, laquelle couche cachée est en association opérationnelle avec la couche d'entrée, et
une couche de sortie comprenant une pluralité de noeuds de sortie, laquelle couche de sortie est en association opérationnelle avec la couche cachée,
dans lequel chacun des noeuds de sortie correspond à un type de comportement.

26. Appareil selon l'une quelconque des revendications 17 à 25, dans lequel les données reçues sont des données de courrier électronique, et le comportement aberrant à identifier est des virus de courrier électronique se propageant à travers le réseau.

27. Appareil selon la revendication 26, dans lequel au moins certains des noeuds de sortie correspondent à des vitesses de propagation de virus de courrier électronique.

28. Appareil selon l'une quelconque des revendications 17 à 27, incluant en outre un moyen d'alerte agencé en association opérationnelle avec au moins certains des noeuds de sortie et utilisable pour générer une d'une pluralité de sorties d'alerte en fonction d'une activation de noeuds de sortie.

29. Dispositif d'activité de courrier électronique pour une utilisation dans l'identification de virus de courrier électronique, le dispositif étant situé dans un réseau et utilisable pour communiquer avec d'autres dispositifs dans le réseau, comprenant
un moyen de récupération utilisable pour récupérer des données représentatives d'un trafic de courrier électronique, sur une période de temps, depuis un parmi : un fichier journal faisant partie d'un agencement de pare-feu, ou un fichier journal accessible depuis une machine serveur de courrier électronique, ou une pluralité de fichiers journal accessibles depuis une pluralité de machines serveurs de courrier électronique ;
un moyen d'organisation agencé pour organiser les données récupérées en une représentation indicatrice d'une distribution dudit trafic de courrier électronique sur la période ;
un moyen de transformation agencé pour transformer la représentation en un format approprié pour une entrée dans un moyen de classification ; et
un moyen de classification utilisable pour recevoir la représentation transformée comme une entrée et utilisable pour générer une sortie représentative d'un type de trafic de courrier électronique.
